# EUROPÄISCHE PATENTSCHRIFT

(11) **EP 1 683 373 B1**
(45) Veröffentlichungstag und Bekanntmachung des Hinweises auf die Patenterteilung: **03.09.2008**
(21) Anmeldenummer: 04791331.4
(22) Anmeldetag: 28.10.2004
(51) Int. Cl.: H04Q 7/22, H04Q 7/38

(54) **VERFAHREN ZUR ÜBERTRAGUNG VON BENACHRICHTIGUNGEN BEZÜGLICH EINES MULTIMEDIA BROADCAST/MULTICAST DIENSTES (MBMS), BASISSTATION, TEILNEHMERSTATION UND FUNKKOMMUNIKATIONSSYSTEM**
METHOD FOR TRANSMITTING MESSAGES RELATING TO A MULTIMEDIA BROADCAST/MULTICAST SERVICE (MBMS), BASE STATION, SUBSCRIBER STATION AND RADIOCOMMUNICATION SYSTEM
PROCEDE DE TRANSMISSION DE MESSAGES CONCERNANT UN SERVICE DE DIFFUSION/MULTIDIFFUSION MULTIMEDIA (MBMS), STATION DE BASE, POSTE D'ABONNE ET SYSTEME DE RADIOCOMMUNICATION

(30) Priorität: 14.11.2003 EP 03257200
(43) Veröffentlichungstag der Anmeldung: 26.07.2006
(73) Patentinhaber: Nokia Siemens Networks GmbH & Co. KG, 81541 München (DE)
(72) Erfinder: ECKERT, Michael, 38122 Braunschweig (DE); KROTH, Norbert, 14482 Potsdam (DE); RANDALL, Dave, Romsey Hampshire SO51 5SZ (GB); SOMMER, Volker, 13503 Berlin (DE)
(86) Internationale Anmeldenummer: PCT/EP2004/052700
(87) Internationale Veröffentlichungsnummer: WO 2005/048616

(56) Entgegenhaltungen:
- EP-A- 1 213 939
- US-A1- 2003 088 695
- US-A1- 2003 157 949
- "Definitions and Characteristics of Multicast Channels" TSG RAN WORKING GROUP 2 (RADIO LAYER 2 AND RADIO LAYER 3), XX, XX, 8. März 1999 (1999-03-08), Seiten 1-11, XP002275698
- SIEMENS: "Considerations on MBMS Notification" 3GPP RAN2 AND RAN3 JOINT MBMS MEETING, XX, XX, Nr. r2-30073, 15. Januar 2003 (2003-01-15), Seiten 1-3, XP002275700
- ERICSSON: "R2-030926, MBMS Paging/Notification considerations" 3GPP TSG-RAN2-3 JOINT ADHOC ON MBMS, [Online] 14. Mai 2003 (2003-05-14), Seiten 1-6, XP002317867 PARIS Gefunden im Internet: URL:http://www.3gpp.org/ftp/tsg_ran/WG2_RL 2/TSGR2_AHs/2003_05_MBMS/Tdocs/R2R3_joint/ > [gefunden am 2005-02-14]
- SAMSUNG: "R2-032608, MBMS common paging with 1 UE DRX cycle" TSG-RAN WORKING GROUP 2, [Online] 17. November 2003 (2003-11-17), Seiten 1-5, XP002317868 SAN DIEGO, CA, USA Gefunden im Internet: URL:http://www.3gpp.org/ftp/tsg_ran/WG2_RL 2/TSGR2_39/Docs/> [gefunden am 2005-02-14]
- NOKIA: "R2-032667, Text Proposal to capture MBMS Notification decisions in TS 25.346" 3GPP TSG RAN WG2 MEETING, [Online] 17. November 2003 (2003-11-17), Seiten 1-2, XP002317869 SAN DIEGO, CA, USA Gefunden im Internet: URL:http://www.3gpp.org/ftp/tsg_ran/WG2_RL 2/TSGR2_39/Docs/> [gefunden am 2005-02-14]

## Beschreibung

Die Erfindung betrifft ein Verfahren zur Übertragung von Nutzinformationen in einem Funkkommunikationssystem mit mindestens einer Funknetzwerkkontrolleinrichtung, mindestens einer Basisstation und mindestens eine Teilnehmerstation nach dem Oberbegriff des Anspruchs 1.

Die Erfindung betrifft ferner eine Basisstation nach dem Oberbegriff des Anspruchs 9, eine Teilnehmerstation nach dem Oberbegriff des Anspruchs 13, sowie ein Funkkommunikationssystem nach dem Oberbegriff des Anspruchs 14.

Dienste (Services) gewinnen zunehmend an Bedeutung in drahtgebundenen und drahtlosen Kommunikationssystemen. Die erwartete Entwicklung führt voraussichtlich zu einer deutlichen Erhöhung der Zahl der zur Verfügung stehenden Dienste. In Funkkommunikationssystemen kommt ihnen aufgrund der ermöglichten Mobilität der Teilnehmer eine große Bedeutung zu.

In Funkkommunikationssystemen werden Informationen (beispielsweise Sprache, Bildinformation, Videoinformation, SMS [Short Message Service], MMS [Multimedia Message Service] oder andere Daten) mit Hilfe von elektromagnetischen Wellen über eine Funkschnittstelle zwischen sendender und empfangender Station (Basisstation bzw. Teilnehmerstation) übertragen. Das Abstrahlen der elektromagnetischen Wellen erfolgt dabei mit Trägerfrequenzen, die in dem für das jeweilige System vorgesehenen Frequenzband liegen.

Für das eingeführte GSM-Mobilfunksystem (Global System for Mobile Communication) werden Frequenzen bei 900, 1800 und 1900 MHz genutzt. Diese Systeme übermitteln im wesentlichen Sprache, Telefax und Kurzmitteilungen SMS (Short Message Service) als auch digitale Daten.

Für zukünftige Mobilfunksysteme mit CDMA- oder TD/CDMA-Übertragungsverfahren (Time Divison / Code Division Multiple Access), wie beispielsweise UMTS (Universal Mobile Telecommunication System) oder andere Systeme der dritten Generation, sind Frequenzen im Frequenzband von ca. 2000 MHz vorgesehen. Diese Systeme der dritten Generation werden entwickelt mit den Zielen weltweiter Funkabdeckung, einem großen Angebot an Diensten zur Datenübertragung und vor allem eine flexible Verwaltung der Kapazität der Funkschnittstelle, die bei Funkkommunikationssystemen die Schnittstelle mit den geringsten Ressourcen ist. Bei diesen Funkkommunikationssystemen soll es vor allem durch die flexible Verwaltung der Funkschnittstelle möglich sein, dass einer Teilnehmerstation bei Bedarf eine große Datenmenge mit hoher Datengeschwindigkeit senden und/oder empfangen kann.

Für das erwähnte UMTS-Mobilfunksystem wird zwischen einem so genannten FDD-Modus (Frequency Division Duplex) und einem TDD-Modus (Time Division Duplex) unterschieden. Der TDD-Modus zeichnet sich insbesondere dadurch aus, dass ein gemeinsames Frequenzband sowohl für die Signalübertragung in Aufwärtsrichtung (UL - Uplink) als auch in Abwärtsrichtung (DL - Downlink) genutzt wird, während der FDD-Modus für die beiden Übertragungsrichtungen jeweils ein unterschiedliches Frequenzband nutzt.

In zellularen Funknetzen erfolgt die Verbindung zwischen mindestens einer Basisstation und einer Teilnehmerstation über eine Funkkommunikations-Schnittstelle. Die Basisstation kann dabei mehrere Funkzellen bedienen, z.B. in Form von Sektoren.

Üblicherweise sind Basisstation und eine Funknetzwerkkontrolleinrichtung (RNC Radio Network Controler) Bestandteile eines Basisstationssubsystems (RNS Radio Network Subsystem). Ein Funkkommunikationssystem umfasst in der Regel mehrere Basisstationssubsysteme, die an ein Kernnetz (CN Core Network) angeschlossen sind. Dabei ist die Funknetzwerkkontrolleinwichtung des Basisstationssubsystems mit einer Zugangseinrichtung (SGSN Serving GPRS Support Node) des Kernnetzes verbunden.

Neben individuellen Nutzinformationen werden in Funkkommunikationssystemen Daten übertragen, die mehreren Benutzern zur Verfügung gestellt werden. Beispielsweise umfassen solche Nutzinformationen Video streams oder andere Broadcast-und/oder Multicast-Informationen. Die Dienste zur Übertragung von Nutzinformationen, welche nicht nur individuell für einen einzigen Teilnehmer vorgesehen sind, sondern mehreren Teilnehmern zur Verfügung gestellt werden, werden unter dem Begriff MBMS (Multimedia Broadcast/Multicast Service) zusammengefasst. Unterschiedliche MBMS-Dienste (Multimedia Broadcast/Multicast Service) werden vom Kernnetz in der Regel als separafte Datenströme bereitgestellt.

Aus dem Dokument XP-002275698, "Definitions and Characteristics of Multicast Channels", LG Information & Communications, Ltd. Korea, TSG-RAN Working Group 2 (Radio Layer 2 and Radio Layer 3), Stockholm, 8.-11.03.1999, Seiten 1-11, ist ein Multicast Control Channel bekannt auf dem Kontrollinformationen für auf einem Multicast Channel übertragene Multicast Dienste übertragen werden. Bestimmte Abschnitte auf dem Multicast Control Channel sind einer bestimmten International Mobile Group Identity (IMGI) zugeordnet, so dass eine für einen bestimmten Multicast Dienst angemeldete Teilnehmerstation nur den entsprechenden Abschnitt des Multicast Control Channel empfangen und dekodieren muss, um entsprechende Kontrollinformationen zu empfangen.

Bevor die Nutzinformationen als Dienst mehreren Teilnehmern zur Verfügung gestellt werden, erfolgt eine Benachrichtigung der Teilnehmerstationen der Teilnehmer, welche den Dienst nutzen wollen, vor der eigentlichen Übertragung der Nutzinformationen des Dienstes. Diese Benachrichtigung der Teilnehmerstationen ist notwendig, damit die Empfänger konfiguriert werden können. Je nachdem, in welchem Modus sich die Teilnehmerstationen befinden (z.B. "connected mode" oder "idle mode"), erfolgt die Benachrichtigung beispielsweise in Form einer "Notification" oder eines Paging. Üblicherweise werden zur Benachrichtigung gruppenspezifische Mechanismen angewendet, bei denen mehrere Teilnehmerstationen gleichzeitig angesprochen werden. Ein Beispiel für ein Paging für Multicast-Dienste ist in dem Dokument XP-002275700, "Considerations on MBMS Notification", Siemens, 3GPP RAN2 & RAN3 Joint MBMS Meeting Wokingham, Berkshire, UK, 15/16.01.2003, Seiten 1-3, beschrieben.

Die Übertragung von Broadcast/Multicast-Informationen als Dienste sollte vorteilhaft erfolgen. Insbesondere sollte eine vermeidbare Belegung von Funkressourcen möglichst vermieden werden.

Im Folgenden werden MBMS-Dienste näher betrachtet, ohne dass die Lehre und Anwendung der hier beschriebenen Erfindung hierauf beschränkt sein muss.

Im Rahmen der Standardisierung von Netzwerkfunktionalitäten des UTRAN (UMTS Terrestrial Radio Access Network) und GERAN (GSM EDGE Radio Access Network) durch 3GPP (3^{rd} Generation Partnership Project) wird die Unterstützung des MBMS (Multimedia Broadcast/Multicast Service) definiert. Näheres hierzu ist den technischen Spezifikationen 3GPP TS 22.146 V6.2.0 (2003-03) und 3GPP TS 23.246 V1.1.0 (2003-07) entnehmbar. Ziel des MBMS ist es, Multimedia-Daten mit einer typischerweise hohen Datenrate mittels einer unidirektionalen Punkt-zu-Multipunkt-Übertragung gleichzeitig einer Vielzahl von Teilnehmern über gemeinsam genutzte Kanäle zur Verfügung stellen zu können, wobei vorzugsweise pro Funkzelle nur ein MBMS-Funkkanal verwendet wird. Vorteilhaft wird hierdurch eine vielfache Übertragung gleicher Daten auf mehreren Punkt-zu-Punkt-Verbindungen bzw. Kanälen vermieden.

Um empfangende Teilnehmerstationen in einer Funkzelle entsprechend zum Empfang des MBMS zu konfigurieren, ist es erforderlich, die Teilnehmerstationen vor der eigentlichen Datenübertragung eines Dienstes durch einen Anzeiger bzw. eine Mitteilung zu benachrichtigen. Dabei wird derzeit angedacht, zur Unterstützung des diskontinuierlichen Empfangs den bekannten UTRA Paging Mechanismus für idle und URA/CELL_PCH Teilnehmerstationen zu verwenden, bei dem mehrere Teilnehmerstationen zu so genannten Paging-Gruppen zusammengefasst und

über spezifische Ereignisse (z.B. Paging einer Teilnehmerstation zum Aufbau eines Sprachverbindung) während eines definierten Zeitraums (DRX cycle) benachrichtigt werden.

Aus dem Kapitel 8.3 der technischen Spezifikation 3GPP TS 25.304 V5.3.0 (2003-06) "User Equipment (UE) procedures in idle mode and procedures for cell reselection in connected mode (Release 5)" ist der vorangehend genannte diskontinuierliche Empfang (DRX - Discontinuous Reception) einer Teilnehmerstation bekannt. Dabei bezeichnet weiterhin der DRX cycle ein Teilnehmerstations-individuelles Zeitintervall zwischen Paging-Zeitpunkten (diskontinuierlicher Empfangszyklus).

Aus Kapitel 8.1 der technischen Spezifikation 3GPP TS 25.304 V5.3.0 (2003-06) sowie unter anderem aus Kapitel 5.3.3.10 der technischen Spezifikation 3GPP TS 25.211 V5.4.0 (2003-06) "Physical channels and mapping of transport channels onto physical channels (FDD) (Release 5)" ist ferner der so genannte Paging-Anzeige-Kanal (PICH - Paging Indicator Channel) bekannt. Der PICH ist ein physikalischer Kanal mit einer festen Datenrate, in dem Paging Indikatoren übertragen werden. Der PICH ist immer mit einem S-CCPCH assoziiert, auf den ein PCH Transport Kanal abgebildet ist.

In der Figur 24 des Kapitels 5.3.3.10 der technischen Spezifikation 3GPP TS 25.211 V5.4.0 (2003-06) ist der Funkrahmen von 10ms des PICH dargestellt. In dem Rahmen werden 288 bits für Paging Indikatoren verwendet, währenddessen die verbleibenden 12 bits des Rahmens aktuell nicht verwendet werden.

Im Zusammenhang mit der Nutzung des UTRA Paging Mechanismus werden aktuell zwei Implementierungsvarianten diskutiert:
a) Anwendung von existierenden Teilnehmer-Endgeräte-spezifischen DRX cycles und Verwendung der 12 bislang ungenutzen bits auf den PICH.
b) Anwendung von zusätzlichen dienstespezifischen DRX cycles und Verwendung der 288 bereits genutzen bits auf den PICH.

Implementierung a) wiese dabei den Vorteil auf, dass das Teilnehmer-Endgerät nur einen PICH Rahmen innerhalb seines spezifischen DRX cycles empfangen muss, was vorteilhaft zu einem verringerten Energieverbrauch führt. Nachteilig hingegen ist die nur geringe Anzahl (12) von bits, die zur Unterscheidung einer potenziell großen Anzahl von MBMS-Diensten zur Verfügung stünde.

Implementierung b) besäße hingegen den Vorteil, dass eine relativ große Anzahl (288) von Bits potenziell zur Verfügung stünde, um MBMS-Dienste zu identifizieren. Allerdings besäße diese Lösung den Nachteil, dass die Teilnehmer-Endgeräte eine größere Anzahl PICH Rahmen empfangen müssten und damit der Energieverbrauch stiege.

Der Erfindung liegt daher die Aufgabe zu Grunde, ein Verfahren und eine Basisstation der eingangs genannten Art aufzuzeigen, welche eine effiziente Anzeige von Diensten ermöglichen.

Die Aufgabe wird durch die Merkmale der unabhängigen Ansprüche gelöst.

Bei dem erfindungsgemäßen Verfahren zur Übertragung von Daten in einem Funkkommunikationssystem gemäß Anspruch 1, in dem Teilnehmerstationen vor der Übertragung von Nutzinformationen als Dienst, welcher mehreren Teilnehmern zur Verfügung gestellt wird, benachrichtigt werden, erfolgt eine Benachrichtigung an die Teilnehmerstationen unter Verwendung eines für Dienste dedizierten Paging-Anzeige-Kanals, wobei die Paging-Anzeiger auf dem dedizierten Paging-Anzeige-Kanal Informationen zu einem Dienstekontrollkanal umfassen. Teilnehmerstationen erhalten durch einen Paging-Anzeiger Informationen, denen entnehmbar ist, dass auf dem Dienstekontrollkanal Informationen hinsichtlich eines Dienstes empfangen werden können. Beispielsweise ist einer auf dem Dienstekontrollkanal empfangenen Information entnehmbar, mit welchem Spreizcode der entsprechende Dienst übertragen wird.

Eine Benachrichtigung, die mehrere Teilnehmerstationen über eine (Punkt-zu-Multipunkt) Übertragung eines Dienstes, beispielsweise eines MBMS-Dienstes, informiert, kann so unabhängig von Benachrichtigungen erfolgen, die auf einem Zell-Paging-Anzeige-Kanal übertragen werden, um einzelne Teilnehmerstationen über eine teilnehmerstationsspezifische Punkt-zu-Punkt Verbindung, beispielsweise einen eingehenden Anruf, zu informieren. Eine teilnehmerspezifische Punkt-zu-Punkt Verbindung ist z.B. leitungsvermittelt (circuit switched) oder paketvermittelt (packet switched) aufgebaut. An mehrere

Teilnehmerstationen gleichzeitig gerichtete Benachrichtigungen für MBMS-Dienste können durch die Erfindung unabhängig von Benachrichtigungen für teilnehmerspezifische Verbindungen erfolgen. Der Zell-Paging-Anzeige-Kanal entspricht beispielsweise dem Paging-Anzeige-Kanal (PICH: Paging Indicator Channel) aus Kapitel 8.1 der technischen Spezifikation 3GPP TS25.304 V5.3.0 (2003-06) sowie unter anderem aus Kapitel 5.3.3.10 der technischen Spezifikation 3GPP TS25.211 V5.4.0 (2003-06). Die Erfindung ermöglicht, dass nur Teilnehmerstationen, die für den Empfang eines Dienstes vorgesehen sind, d.h. sich für den Empfang beispielsweise eines MBMS-Dienstes registriert haben, den für (Punkt-zu-Multipunkt übertragene) Dienste, beispielsweise MBMS-Dienste, dedizierten Paging-Anzeige-Kanal empfangen. Insbesondere kann der für Dienste dedizierte Paging-Anzeige-Kanal zeitgleich mit dem Zell-Paging-Anzeige-Kanal übertragen und von Teilnehmerstationen empfangen werden. Die Auswertung von auf dem Zell-Paging-Anzeige-Kanal und auf dem für Dienste dedizierten Paging-Anzeige-Kanal empfangenen Paging-Anzeigern kann von den Teilnehmerstationen beispielsweise sequentiell durchgeführt werden.

Vorteilhafter Weise werden in dem für Dienste dedizierten Paging-Anzeige-Kanal mehrere diskontinuierliche Empfangszyklen von Paging-Anzeigern übertragen.

Eine Weiterbildung der Erfindung sieht vor, dass die mehreren diskontinuierlichen Empfangszyklen von Paging-Anzeigern auf dem dedizierten Paging-Anzeige-Kanal Dienst-spezifisch oder Dienstklassen-spezifisch belegt sind. Auf diese Weise können verschiedene Arten von Diensten oder verschiedene Diensteklassen unterschiedlichen diskontinuierlichen Empfangszyklen zugeordnet werden. Eine Teilnehmerstation empfängt dann beispielsweise nur diejenigen diskontinuierlichen Empfangszyklen von Diensten oder Diensteklassen, für deren Empfang die Teilnehmerstation vorgesehen ist bzw. für deren Empfang die Teilnehmerstation registriert wurde. Die Teilnehmerstation empfängt auf diese Weise nur diejenigen Empfangszyklen, die sie benötigt und reduziert daher ihren Energieverbrauch im Vergleich zu einem Empfang aller Empfangszyklen. Eine Unterteilung von Diensten in Diensteklassen, kann beispielsweise durch eine Unterteilung in eine Diensteklasse mit Diensten, deren Daten schubweise (z.B. Videodaten [streaming video]) übertragen werden und in eine Diensteklasse mit Diensten, deren Daten kontinuierlich (download) übertragen werden.

In einer weiteren Weiterbildung werden in dem für Dienste dedizierten Paging-Anzeige-Kanal mehrere diskontinuierliche Empfangszyklen von Paging-Anzeigern mit identischer und/oder unterschiedlicher Wiederholrate übertragen. Dadurch wird ermöglicht die Wiederholrate für Paging-Anzeiger beispielsweise von der Diensteklasse abhängig zu machen, für die ein Paging-Anzeiger verwendet wird. Beispielsweise kann die Wiederholrate umso größer gewählt werden je höher die Diensteklasse eines Dienstes ist.

Eine Weiterbildung sieht vor, dass zumindest ein Paging-Anzeiger auf dem dedizierten Paging-Anzeige-Kanal Informationen zur Diensteidentifizierung zu verschiedenen und/oder verschiedenartigen Diensten umfasst. Die Teilnehmerstation kann so anhand des empfangenen Paging-Anzeigers die Diensteidentifizierungsinformationen auswerten und feststellen, ob es sich um einen Dienst oder eine Diensteklasse handelt, welche die Teilnehmerstation empfangen möchte bzw. ob sie für diesen Dienst oder einen Dienst aus der Diensteklasse registriert ist. Nur wenn dies der Fall ist, wird die Teilnehmerstation nachfolgend auf dem Dienstekontrollkanal übertragene Informationen empfangen.

In einer bevorzugten Ausgestaltung der Erfindung empfängt eine Teilnehmerstation zur Erfassung der Benachrichtigung an die Teilnehmerstation unter Verwendung eines für Dienste dedizierten Paging-Anzeige-Kanals entweder periodisch die Paging-Anzeiger der diskontinuierlichen Empfangszyklen auf dem für die Dienste dedizierten Anzeigekanal oder eine Paging-Anzeige-Information auf einem Zell-Paging-Anzeige-Kanal.

Es ist zweckmäßig, dass die Paging-Anzeige-Information auf dem Zell-Paging-Anzeige-Kanal mehrere Bits zur Indikation der Diensteinformation auf dem für Dienste dedizierten Paging-Anzeige-Kanal umfasst. Durch das verwenden mehrerer Bits ergibt sich ein Informationsgehalt der Paging-Anzeige-Information von 2 hoch der Anzahl der Bits.

Durch das Verwenden mehrerer Bits wird mit Vorteil ermöglicht, dass die Paging-Anzeige-Information auf dem Zell-Paging-Anzeige-Kanal eine Indikation der Diensteklasse und/oder eine Paging-spezifische Sequenznummer umfasst. Die Teilnehmerstation kann so erkennen, welche Diensteklasse ein nachfolgend auf dem für Dienste dedizierten Paging-Anzeige-Kanal übertragener Paging-Anzeiger betrifft und/oder welcher spezifische Paging-Anzeiger, dem beispielsweise eine spezifische Sequenznummer zugeordnet ist, nachfolgend übertragen wird. Hat die Teilnehmerstation beispielsweise zuvor einen Paging-Anzeiger auf dem für Dienste dedizierten Paging-Anzeige-Kanal empfangen, der der Paging-spezifischen Sequenznummer zugeordnet ist, die die Teilnehmerstation der aktuell empfangenen Paging-Anzeige-Information entnimmt, so empfängt die Teilnehmerstation diesen Paging-Anzeiger nicht erneut auf dem für Dienste dedizierten Paging-Anzeige-Kanal. Es kann somit vermieden werden, bereits empfangene Paging-Anzeiger wiederholt zu empfangen.

Vorteilhafte Ausgestaltung und Weiterbildungen sind Gegenstand der abhängigen Ansprüche.

Die erfindungsgemäße Basisstation sowie ein zugehöriges Funkkommunikationssystem eignen sich insbesondere zur Durchführung des erfindungsgemäßen Verfahrens. In der Basisstation, dem Funkkommunikationssystem bzw. seinen einzelnen Bestandteilen können jeweils entsprechende Mittel und Einrichtungen zur Durchführung des Verfahrens und seiner Ausgestaltungen und Weiterbildungen vorhanden sein.

Nachfolgend soll die Erfindung anhand von Ausführungsbeispielen und drei Figuren näher erläutert werden.

Hierbei zeigen:
- Fig. 1:: eine schematische Darstellung eines erfindungsgemäßen Funkkommunikationsnetzes,
- Fig. 2:: eine erste schematische Darstellung eines Ablaufdiagramms zur der erfindungsgemäßen Übertragung mittels eines für Dienste dedizierten Paging-Anzeige-Kanals (MBMS PICH),
- Fig. 3:: eine zweite schematische Darstellung eines Ablaufdiagramms zur der erfindungsgemäßen Übertragung mittels eines für Dienste dedizierten Paging-Anzeige-Kanals (MBMS PICH).

Gleiche Bezugszeichen in den Figuren bezeichnen gleiche Gegenstände.

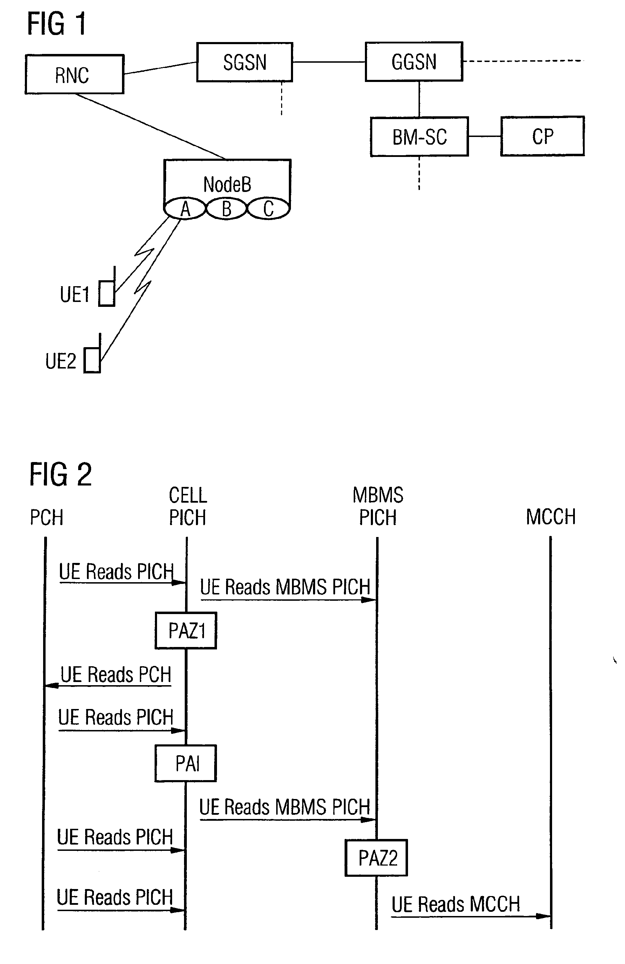

In der Fig. 1 ist ein Blockschaltbild der Struktur eines bekannten Funk-Kommunikationssystems dargestellt, wie es beispielsweise in dem beschriebenen GSM- oder UMTS-Mobilfunksystem realisiert wird. Die oben genannte technische Spezifikation 3GPP TS 23.246 V1.1.0 (2003-07) zeigt in Kapitel 4.2 ein beispielhaftes Architektur-Referenzmodell, in dem die Erfindung zum Einsatz kommen kann.

Die Basisstation NodeB bedient die Funkzellen A, B und C. Die Basisstation NodeB ist über eine Funknetzwerkkontrolleinrichtung RNC mit einer nicht dargestellten Mobilvermittlungsstelle (MSC, Mobile Switching Center) verbunden. Die Funknetzwerkkontrolleinrichtung RNC führt unter anderem eine zentrale Zuweisung der Funkressourcen mehrerer angeschlossener Basisstationen NodeB durch. Die Kombination aus Basisstationen NodeB und Funknetzwerkkontrolleinrichtung RNC wird auch als Funknetzwerkuntersystem (RNS Radio Network Subsystem) bezeichnet. Jede Basisstation Node B kann mittels zugewiesener Funkressourcen Verbindungen zu Teilnehmer-Endgeräten UE1 und UE2, dieses sind beispielsweise mobile oder stationäre Endgeräte, aufbauen und auslösen.

Die Funknetzwerkkontrolleinrichtung RNC ist weiterhin über einen so genannten SGSN (Serving GPRS Support Node) sowie GGSN (Gateway GPRS Support Node) mit einem BM-SC (BroadcastMulticast Service Center) verbunden. Die Funktionalitäten dieser Einrichtungen sind unter anderem in den Kapiteln 5.1 und 5.4 der technischen Spezifikation 3GPP TS 23.246 V1.1.0 (2003-07) beschrieben. Das BM-SC dient dabei beispielsweise als Zugangsschnittstelle für Dienstanbieter CP (Service- oder Content-Provider) und zum Initiieren eines Aufbaus von MBMS-Kanälen sowie zur zeitlichen Steuerung der Datenübertragung auf diesen Kanälen. Der SGSN erfüllt hingegen Netzwerksteuerfunktionen für die Übertragung von MBMS-Daten. Weitere, hier nicht näher beschriebene Komponenten des Systems können ebenfalls zur Realisierung des MBMS-Dienstes genutzt werden.

In gleicher Weise kann die Erfindung in den Netzwerkkomponenten eines Systems der zweiten Generation, bspw. GSM, zur Anwendung kommen.

Figur 2 zeigt schematisch ein Ablaufdiagramm für eine erfindungsgemäße Übertragung mittels eines für Dienste dedizierten Paging-Anzeige-Kanals MBMS PICH.

Eine Teilnehmerstation UE, beispielsweise Teilnehmer-Endgerät UE1 oder UE2, empfängt entsprechend ihrem diskontinuierlichen Empfangszyklus einen Zell-Paging-Anzeige-Kanal CELL PICH. Dies ist dargestellt durch die auf den Zell-Paging-Anzeige-Kanal CELL PICH zeigenden Pfeile UE Reads PICH. Die Teilnehmerstation UE detektiert während eines ersten Empfangszyklus einen ersten Paging-Anzeiger PAZ1 gemäß dem Stand der Technik und empfängt nach Verarbeiten des ersten Paging-Anzeigers PAZ1 in einem nächsten Schritt einen Transportkanal PCH. Dies ist durch einen Pfeil UE Reads PCH dargestellt.

Während eines weiteren Empfangszyklus auf dem Zell-Paging-Anzeige-Kanal CELL PICH empfängt die Teilnehmerstation UE eine Paging-Anzeige-Information PAI, die beispielsweise durch 4 Bits gebildet wird. Alternativ kann die Paging-Anzeige-Information PAI auch aus einem Bit oder einer beliebigen anderen Anzahl von Bits gebildet werden.

Der empfangenen Bitkombination der Paging-Anzeige-Information PAI ist beispielsweise eine Diensteklasse zugeordnet, die neben anderen MBMS-Diensten auch einen für die Teilnehmerstation UE vorgesehenen MBMS-Dienst umfasst. Für den Empfang dieses MBMS-Dienstes hat sich die Teilnehmerstation UE beispielsweise zuvor bei einem Dienstanbieter angemeldet. Die Teilnehmerstation UE entnimmt der Paging-Anzeige-Information PAI somit, dass nachfolgend ein zweiter Paging-Anzeiger PAZ2 für den vorgesehenen MBMS-Dienst auf einem für Dienste dedizierten Paging-Anzeige-Kanal MBMS PICH übertragen wird.

Alternativ oder zusätzlich zu einer Zuordnung von Bitkombinationen der Paging-Anzeige-Information PAI zu Diensteklassen kann wenigstens einer Bitkombination auch ein bestimmter Dienst, beispielsweise der für die Teilnehmerstation UE vorgesehene MBMS-Dienst, zugeordnet sein. Eine Bitkombination kann beispielsweise einer Paging-spezifischen Sequenznummer entsprechen, der ein Dienst zugeordnet ist. Auf diese Weise kann die Paging-Anzeige-Information PAI der Teilnehmerstation UE explizit anzeigen, ob nachfolgend ein Paging-Anzeiger eines bestimmten Dienstes auf dem für Dienste dedizierten Paging-Anzeige-Kanal MBMS PICH erfolgt.

Zum Übertragen von Paging-Anzeigern der Diensteklasse, die den für die Teilnehmerstation UE vorgesehenen MBMS-Dienst umfasst, wird auf dem für Dienste dedizierten Anzeigekanal MBMS PICH ein diskontinuierlicher Empfangszyklus verwendet, der in diesem Ausführungsbeispiel eine geringere Wiederholrate aufweist als der diskontinuierliche Empfangszyklus des ersten Paging-Anzeigers PAZ1 der Teilnehmerstation UE auf dem Zell-Paging-Anzeige-Kanal CELL PICH. Selbstverständlich kann die Wiederholrate des diskontinuierlichen Empfangszyklus auf dem für Dienste dedizierten Anzeigekanal MBMS PICH auch größer oder gleich der Wiederholrate auf dem Zell-Paging-Anzeige-Kanal CELL PICH sein. Die jeweilige Wiederholrate gemäß Figur 2 ist umgekehrt proportional zum Abstand (der Zeitdifferenz) zwischen zwei benachbarten Pfeilen, die auf den für Dienste dedizierten Paging-Anzeige-Kanal MBMS PICH bzw. auf den Zell-Paging-Anzeige-Kanal CELL PICH zeigen.

Der zweite auf den für Dienste dedizierten Paging-Anzeige-Kanal MBMS PICH zeigende Pfeil gibt denjenigen Empfangszyklus an, währenddessen die Teilnehmerstation UE den für Dienste dedizierten Paging-Anzeige-Kanal MBMS PICH, ausgelöst durch die zuvor empfangene Paging-Anzeige-Information PAI, empfängt. Die Teilnehmerstation UE empfängt während dieses Empfangszyklus den zweiten Paging-Anzeiger PAZ2. Der zweiten Paging-Anzeiger PAZ2 zeigt der Teilnehmerstation UE an, dass nachfolgend auf einem Dienstekontrollkanal MCCH weitere den MBMS-Dienstes betreffende Informationen übertragen werden. Die Teilnehmerstation UE empfängt daraufhin die weiteren Informationen auf dem Dienstekontrollkanal MCCH. Die weiteren Informationen benötigt die Teilnehmerstation UE, um nachfolgend den MBMS-Dienst empfangen zu können. Der Empfang auf dem Dienstekontrollkanal MCCH ist durch den Pfeil UE Reads MCCH dargestellt.

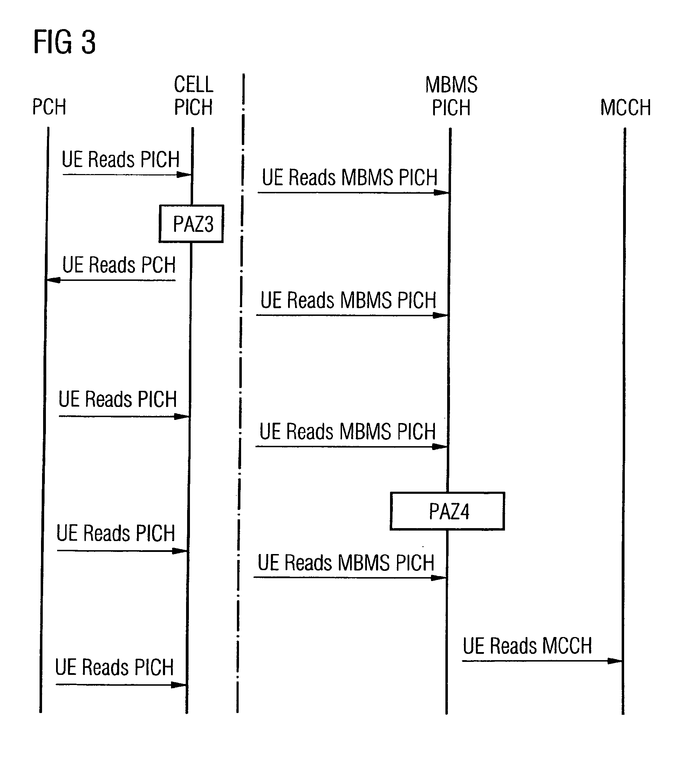

Eine alternative Ausführung der Erfindung ist in Figur 3 schematisch dargestellt. Die Teilnehmerstation UE liest entsprechend ihrem diskontinuierlichen Empfangszyklus den Zell-Paging-Anzeige-Kanal CELL PICH und empfängt einen dritten Paging-Anzeiger PAZ3. Nachfolgend empfängt die Teilnehmerstation UE, wie bereits anhand von Figur 2 beschrieben, den in dem dritten Paging-Anzeiger PAZ3 angegebenen Transportkanal PCH.

In diesem Ausführungsbeispiel wird keine Paging-Anzeige-Information PAI auf den Zell-Paging-Anzeige-Kanal CELL PICH übertragen. Stattdessen wird ein diskontinuierlicher Empfangszyklus periodisch auf dem für Dienste dedizierten Paging-Anzeige-Kanal MBMS PICH übertragen. Dieser diskontinuierliche Empfangszyklus hat, wie dem Abstand der entsprechenden Pfeile UE Reads MBMS PICH in Figur 3 zu entnehmen ist, eine höhere Wiederholrate als der diskontinuierliche Empfangszyklus auf dem für Dienste dedizierten Paging-Anzeige-Kanals MBMS PICH in Figur 2. Beispielsweise wird der diskontinuierliche Empfangszyklus in Figur 2 für eine andere Diensteklasse oder einen anderen Dienst verwendet als der diskontinuierliche Empfangszyklus in Figur 3. Selbstverständlich kann der in Figur 2 dargestellte diskontinuierliche Empfangszyklus auch mit gleicher Wiederholrate zusätzlich zu dem in Figur 3 dargestellten diskontinuierlichen Empfangszyklus auf dem für Dienste dedizierten Paging-Anzeige-Kanal MBMS PICH verwendet werden. Die Teilnehmerstation UE kann in diesem nicht dargestellten Ausführungsbeispiel einen der diskontinuierlichen Empfangszyklen oder beide Empfangszyklen empfangen, wobei die Empfangszyklen jeweils wenigstens einer Diensteklasse oder einem Dienst zugeordnet sind.

Nachdem die Teilnehmerstation UE in Figur 3 während zweier Empfangszyklen, angezeigt durch die ersten beiden Pfeile UE Reads MBMS PICH, auf dem für Dienste dedizierten Paging-Anzeige-Kanal MBMS PICH empfangen hat, ohne einen Paging-Anzeiger zu empfangen, empfängt sie während eines dritten Empfangszyklus einen vierten Paging-Anzeiger PAZ4. Der vierte Paging-Anzeiger umfasst eine Information zur Diensteidentifizierung anhand derer die Teilnehmerstation erkennt, dass der vierte Paging-Anzeiger PAZ4 einen MBMS-Dienst betrifft, der für die Teilnehmerstation UE zum Empfang vorgesehen ist. Weiterhin zeigt der vierte Paging-Anzeiger PAZ4 der Teilnehmerstation UE an, dass weitere Information, die erforderlich sind, um den vorgesehenen MBMS-Dienst empfangen zu können, auf dem Dienstekontrollkanal MCCH empfangen werden können. Die Teilnehmerstation UE empfängt daher nachfolgend die weiteren Informationen auf dem Dienstekontrollkanal MCCH, dargestellt durch den Pfeil UE Reads MCCH.

Empfängt die Teilnehmerstation UE auf dem für Dienste dedizierten Paging-Anzeige-Kanal MBMS PICH einen Paging-Anzeiger mit einer Information anhand derer ein Dienst identifiziert wird, für dessen Empfang die Teilnehmerstation UE nicht vorgesehen ist, werden keine weiteren Informationen auf dem Dienstekontrollkanal empfangen.

Selbstverständlich können erfindungsgemäß sowohl das Teilnehmer-Endgerät UE1 als auch das Teilnehmer-Endgerät UE2 gleichzeitig auf dem für Dienste dedizierten Paging-Anzeige-Kanal sowohl gleiche als auch unterschiedliche diskontinuierliche Empfangszyklen von Paging-Anzeigern und somit gleiche oder unterschiedliche Paging-Anzeiger empfangen. Der Empfang erfolgt selbstverständlich wie oben exemplarisch für die Teilnehmerstation UE anhand der Ausführungsbeispiele gemäß Figur 2 und 3 beschrieben. Unterschiedliche Teilnehmerstationen, beispielsweise unterschiedliche Teilnehmer-Endgeräte, können gemäß der Erfindung Paging-Anzeiger sowohl für gleiche Diensteklassen oder Dienste als auch für unterschiedliche Diensteklassen oder Dienste zeitgleich empfangen.

## Patentansprüche

1. Verfahren zur Übertragung von Daten in einem Funkkommunikationssystem,
wobei Teilnehmerstationen (UE1, UE2; UE) vor der Übertragung von Nutzinformationen als MBMS Dienst, welcher mehreren Teilnehmern zur Verfügung gestellt wird, benachrichtigt werden,
**dadurch gekennzeichnet,**
**dass** die Benachrichtigung (PAZ2; PAZ4) an die Teilnehmerstationen (UE1, UE2) durch Paging-Anzeiger unter Verwendung eines für MBMS-Dienste dedizierten Paging-Anzeige-Kanals (MBMS PICH) erfolgt, wobei die Paging-Anzeiger (PAZ2; PAZ4) Informationen zu einem MBMS Dienstekontrollkanal (MCCH) umfassen.

2. Verfahren nach Anspruch 1,
**dadurch gekennzeichnet,**
**dass** in dem für MBMS-Dienste dedizierten Paging-Anzeige-Kanal (MBMS PICH) mehrere diskontinuierliche Empfangszyklen von Paging-Anzeigern (PAZ2; PAZ4) übertragen werden.

3. Verfahren nach Anspruch 2,
**dadurch gekennzeichnet,**
**dass** in dem für MBMS-Dienste dedizierten Paging-Anzeige-Kanal (MBMS PICH) mehrere diskontinuierliche Empfangszyklen von Paging-Anzeigern (PAZ2; PAZ4) mit identischer und/oder unterschiedlicher Wiederholrate übertragen werden.

4. Verfahren nach Anspruch 2 oder 3,
**dadurch gekennzeichnet,**
**dass** die mehreren diskontinuierlichen Empfangszyklen von Paging-Anzeigern (PAZ2; PAZ4) auf dem für MBMS-Dienste dedizierten Paging-Anzeige-Kanal (MBMS PICH) Dienst-spezifisch oder Dienstklassen-spezifisch belegt sind.

5. Verfahren nach Anspruch 4,
**dadurch gekennzeichnet,**
**dass** zumindest einer der Paging-Anzeiger (PAZ4) auf dem für MBMS-Dienste dedizierten Paging-Anzeige-Kanal (MBMS PICH) Informationen zur Diensteidentifizierung zu verschiedenen und/oder verschiedenartigen Diensten umfasst.

6. Verfahren nach einem der Ansprüche 1 bis 5,
**dadurch gekennzeichnet,**
**dass** eine Teilnehmerstation (UE1, UE2; UE) zur Erfassung der Benachrichtigung an die Teilnehmerstation (UE1, UE2; UE) unter Verwendung eines für MBMS-Dienste dedizierten Paging-Anzeige-Kanals (MBMS PICH) entweder die Paging-Anzeiger (PAZ2; PAZ4) der diskontinuierlichen Empfangszyklen auf dem für MBMS-Dienste dedizierten Paging-Anzeige-Kanal (MBMS PICH) periodisch empfängt oder eine Paging-Anzeige-Information (PAI) auf einem Zell-Paging-Anzeige-Kanal (CELL PICH) empfängt.

7. Verfahren nach Anspruch 6,
**dadurch gekennzeichnet,**
**dass** die Paging-Anzeige-Information (PAI) auf dem Zell-Paging-Anzeige-Kanal (CELL PICH) mehrere Bits zur Indikation der Diensteinformation auf dem für MBMS-Dienste dedizierten Paging-Anzeige-Kanal (MBMS PICH) umfasst.

8. Verfahren nach Anspruch 7,
**dadurch gekennzeichnet,**
**dass** die Paging-Anzeige-Information (PAI) auf dem Zell-Paging-Anzeige-Kanal (CELL PICH) eine Indikation der Diensteklasse und/oder eine Paging-spezifische Sequenznummer umfasst.

9. Basisstation (NodeB) zur Übertragung von Daten in einem Funkkommunikationssystem,
mit Mitteln zur Benachrichtigung von Teilnehmerstationen (UE1, UE2; UE) vor der Übertragung von Nutzinformationen als MBMS Dienst, welcher mehreren Teilnehmern zur Verfügung gestellt wird,
**dadurch gekennzeichnet,**
**dass** Mittel zum Erstellen und Versenden der Benachrichtigung (PAZ2; PAZ4) an Teilnehmerstationen (UE1, UE2; UE) durch Paging-Anzeiger unter Verwendung eines für MBMS-Dienste dedizierten Paging-Anzeige-Kanals (MBMS PICH) vorhanden sind, wobei die Paging-Anzeiger (PAZ2; PAZ4) Informationen zu einem MBMS Dienstekontrollkanal (MCCH) umfassen.

10. Basisstation (NodeB) nach Anspruch 9,
**dadurch gekennzeichnet,**
**dass** Mittel zum Übertragen von mehreren diskontinuierliche Empfangszyklen von Paging-Anzeigern (PAZ2; PAZ4) in dem für MBMS-Dienste dedizierten Paging-Anzeige-Kanal (MBMS PICH) vorhanden sind.

11. Basisstation (NodeB) nach Anspruch 10,
**dadurch gekennzeichnet,**
**dass** Mittel zum Übertragen von mehreren diskontinuierliche Empfangszyklen von Paging-Anzeigern (PAZ2; PAZ4) mit identischer und/oder unterschiedlicher Wiederholrate in dem für MBMS-Dienste dedizierten Paging-Anzeige-Kanal (MBMS PICH) vorhanden sind.

12. Basisstation (NodeB) nach Anspruch 10 oder 11,
**dadurch gekennzeichnet,**
**dass** Mittel zur Belegung von mehreren diskontinuierlichen Empfangszyklen von Paging-Anzeigern (PAZ2; PAZ4) auf dem für MBMS-Dienste dedizierten Paging-Anzeige-Kanal (MBMS PICH) Dienst-spezifisch oder Dienstklassen-spezifisch vorgesehen sind.

13. Teilnehmerstation (NodeB) zur übertragung von Daten in einen Funkkommunikationssystem
**dadurch gekennzeichnet,**
**dass** eine Teilnehmerstation (UE1, UE2; UE) Mittel zur Erfassung einer Benachrichtigung (PAZ2; PAZ4) an die Teilnehmerstation (UE1, UE2; UE) unter Verwendung eines für MBMS-Dienste dedizierten Paging-Anzeige-Kanals (MBMS PICH) aufweist, wobei entweder die Paging-Anzeiger (PAZ2; PAZ4) der diskontinuierlichen Empfangszyklen auf dem für MBMS-Dienste dedizierten Paging-Anzeige-Kanal (MBMS PICH) periodisch empfangen werden oder eine Paging-Anzeige-Information (PAI) auf dem Zell-Paging-Anzeige-Kanal (CELL PICH) empfangen wird, und wobei die Paging-Anzeiger (PAZ2; PAZ4) Informationen zu einem MBMS-Dienstekontrollkanal (MCCH) umfassen.

14. Funkkommunikationssystem insbesondere zur Durchführung eines Verfahrens nach einem der Ansprüche 1 bis 8 umfassend mindestens eine Basisstation (NodeB) nach einem der Ansprüche 9 bis 12 und eine Teilnehmerstation (UE1, UE2; UE) nach Anspruch 13.

## Claims

1. Method for transmitting data in a radio communication system,
wherein subscriber stations (UE1, UE2; UE), before the transmission of user information as MBMS service which is provided to a number of subscribers, are informed,
**characterized in that**
information (PAZ2; PAZ4) is provided to the subscriber stations (UE1, UE2) by paging indicators by using a paging indicator channel (MBMS PICH) dedicated to MBMS services, wherein the paging indicators (PAZ2; PAZ4) comprise information relating to an MBMS service control channel (MCCH).

2. Method according to Claim 1,
**characterized in that**
in the paging indicator channel dedicated to MBMS services (MBMS PICH), a number of discontinuous reception cycles of paging indicators (PAZ2; PAZ4) are transmitted.

3. Method according to Claim 2,
**characterized in that**
in the paging indicator channel dedicated to MBMS services (MBMS PICH), a number of discontinuous reception cycles of paging indicators (PAZ2; PAZ4) are transmitted with identical and/or different repetition rate.

4. Method according to Claim 2 or 3,
**characterized in that**
the number of discontinuous reception cycles of paging indicators (PAZ2; PAZ4) are service-specifically or service-class-specifically occupied on the paging indicator channel dedicated to MBMS services (MBMS PICH).

5. Method according to Claim 4,
**characterized in that**
at least one of the paging indicators (PAZ4) on the paging indicator channel dedicated to MBMS services (MBMS PICH) comprises information on service identification for different and/or different types of services.

6. Method according to one of Claims 1 to 5,
**characterized in that**
a subscriber station (UE1, UE2; UE), for detecting the message to the subscriber station (UE1, UE2; UE) by using a paging indicator channel dedicated to MBMS services (MBMS PICH), either periodically receives the paging indicators (PAZ2; PAZ4) of the discontinuous reception cycles on the paging indicator channel dedicated to MBMS services (MBMS PICH) or receives paging indicator information (PAI) on a cell paging indicator channel (CELL PICH).

7. Method according to Claim 6,
**characterized in that**
the paging indicator information (PAI) on the cell paging indicator channel (CELL PICH) comprises a number of bits for indicating the service information on the paging indicator channel dedicated to MBMS services (MBMS PICH).

8. Method according to Claim 7,
**characterized in that**
the paging indicator information (PAI) on the cell paging indicator channel (CELL PICH) comprises an indication of the service class and/or a paging-specific sequence number.

9. Base station (NodeB) for transmitting data in a radio communication system,
comprising means for informing subscriber stations (UE1, UE2; UE) before the transmission of user information as MBMS service which is provided to a number of subscribers,
**characterized in that**
there are means for generating and sending out the message (PAZ2; PAZ4) to subscriber stations (UE1, UE2; UE) by paging indicators by using a paging indicator channel dedicated to MBMS services (MBMS PICH), wherein the paging indicators (PAZ2; PAZ4) comprise information on an MBMS service control channel (MCCH).

10. Base station (NodeB) according to Claim 9,
**characterized in that**
there are means for transmitting a number of discontinuous reception cycles of paging indicators (PAZ2; PAZ4) in the paging indicator channel dedicated to MBMS services (MBMS PICH).

11. Base station (NodeB) according to Claim 10,
**characterized in that**
there are means for transmitting a number of discontinuous reception cycles of paging indicators (PAZ2; PAZ4) with identical and/or different repetition rates in the paging indicator channel dedicated to MBMS services (MBMS PICH).

12. Base station (NodeB) according to Claim 10 or 11,
**characterized in that**
means for occupying a number of discontinuous reception cycles of paging indicators (PAZ2; PAZ4) on the paging indicator channel dedicated to MBMS services (MBMS PICH) are provided service-specifically or service-class-specifically.

13. Subscriber station (NodeB) for transmitting data in a radio communication system,
**characterized in that**
a subscriber station (UE1, UE2; UE) has means for detecting a message (PAZ2; PAZ4) to the subscriber station (UE1, UE2; UE) by using a paging indicator channel dedicated to MBMS services (MBMS PICH), wherein either the paging indicators (PAZ2; PAZ4) of the discontinuous reception cycles are periodically received on the paging indicator channel dedicated to MBMS services (MBMS PICH) or paging indicator information (PAI) is received on the cell paging indicator channel (CELL PICH), and wherein the paging indicators (PAZ2; PAZ4) comprise information on an MBMS service control channel (MCCH).

14. Radio communication system, particularly for carrying out a method according to one of Claims 1 to 8, comprising at least one base station (NodeB) according to one of Claims 9 to 12 and one subscriber station (UE1, UE2; UE) according to Claim 13.

## Revendications

1. Procédé pour la transmission de données dans un système de radiocommunication
des postes d'abonné (UE1, UE2 ; UE) étant informés avant la transmission d'informations utiles en tant que service MBMS, qui est mis à la disposition de plusieurs abonnés,
**caractérisé en ce que**
l'information (PAZ2 ; PAZ4) destinée à des postes d'abonné (UE1, UE2) s'effectue par des indicateurs d'adressage paginé en utilisant un canal d'affichage d'adressage paginé (MBMS PICH) dédié à des services MBMS, les indicateurs d'adressage paginé (PAZ2 ; PAZ4) comportant des informations concernant un canal de contrôle de services MBMS (MCCH).

2. Procédé selon la revendication 1,
**caractérisé en ce que**
plusieurs cycles de réception discontinus d'indicateurs d'adressage paginé (PAZ2 ; PAZ4) sont transmis dans le canal d'affichage d'adressage paginé (MBMS PICH) dédié à des services MBMS.

3. Procédé selon la revendication 2,
**caractérisé en ce que**
plusieurs cycles de réception discontinus d'indicateurs d'adressage paginé (PAZ2 ; PAZ4) sont transmis avec un taux de répétition identique et/ou différent dans le canal d'affichage d'adressage paginé (MBMS PICH) dédié à des services MBMS.

4. Procédé selon la revendication 2 ou 3,
**caractérisé en ce que**
les plusieurs cycles de réception discontinus d'indicateurs d'adressage paginé (PAZ2 ; PAZ4) sur le canal d'affichage d'adressage paginé (MBMS PICH) dédié à des services sont occupés de façon spécifique au service ou à la classe de services.

5. Procédé selon la revendication 4,
**caractérisé en ce que**
au moins l'un des indicateurs d'adressage paginé (PAZ4) sur le canal d'affichage d'adressage paginé (MBMS PICH) dédié à des services MBMS comprend des informations pour l'identification de services sur des services différents et/ou de nature différente.

6. Procédé selon l'une quelconque des revendications 1 à 5,
**caractérisé en ce que**
un poste d'abonné (UE1, UE2 ; UE), pour l'enregistrement de l'information destinée au poste d'abonné (UE1, UE2 ; UE) en utilisant un canal d'affichage d'adressage paginé (MBMS PICH) dédié à des services MBMS, soit reçoit périodiquement les indicateurs d'adressage paginé (PAZ2 ; PAZ4) des cycles de réception discontinus sur le canal d'affichage d'adressage paginé (MBMS PICH) dédié à des services MBMS, soit reçoit une information d'affichage d'adressage paginé (PAI) sur un canal d'affichage d'adressage paginé de cellule (CELL PICH).

7. Procédé selon la revendication 6,
**caractérisé en ce que**
l'information d'affichage d'adressage paginé (PAI) sur le canal d'affichage d'adressage paginé de cellule (CELL PICH) comporte plusieurs bits pour l'indication de l'information de services sur le canal d'affichage d'adressage paginé (MBMS PICH) dédié à des services MBMS.

8. Procédé selon la revendication 7,
**caractérisé en ce que**
l'information d'affichage d'adressage paginé (PAI) sur le canal d'affichage d'adressage paginé de cellule (CELL PICH) comporte une indication de la classe de services et/ou un numéro de séquence spécifique à l'adressage paginé.

9. Station de base (NodeB) pour la transmission de données dans un système de radiocommunication,
comprenant des moyens pour l'information de postes d'abonnés (UE1, UE2; UE) avant la transmission d'informations utiles comme service MBMS qui est mis à la disposition de plusieurs abonnés,
**caractérisé en ce que**
des moyens pour l'élaboration et l'envoi de l'information (PAZ2 ; PAZ4) à des postes d'abonnés (UE1, UE2 ; UE) par des indicateurs d'adressage paginé en utilisant un canal d'affichage d'adressage paginé (MBMS PICH) dédié à des services MBMS sont présents, les indicateurs d'adressage paginé (PAZ2 ; PAZ4) comportant des informations sur un canal de contrôle de service MBMS (MCCH).

10. Station de base (NodeB) selon la revendication 9,
**caractérisé en ce que**
des moyens pour la transmission de plusieurs cycles de réception discontinus d'indicateurs d'adressage paginé (PAZ2 ; PAZ4) sont présents dans le canal d'affichage d'adressage paginé (MBMS PICH) dédié à des services MBMS.

11. Station de base (NodeB) selon la revendication 10,
**caractérisé en ce que**
des moyens pour la transmission de plusieurs cycles de réception discontinus d'indicateurs d'adressage paginé (PAZ2 ; PAZ4) avec un taux de répétition identique et/ou différent sont présents dans le canal d'affichage d'adressage paginé (MBMS PICH) dédié à des services MBMS.

12. Station de base (NodeB) selon la revendication 10 ou 11,
**caractérisé en ce que**
des moyens pour l'occupation de plusieurs cycles de réception discontinus d'indicateurs d'adressage paginé (PAZ2 ; PAZ4) sur le canal d'affichage d'adressage paginé (MBMS PICH) dédié à des services MBMS sont prévus de façon spécifique au service ou de façon spécifique à la classe de services.

13. Poste d'abonné (NodeB) pour la transmission de données dans un système de radiocommunication,
**caractérisé en ce que**
un poste d'abonné (UE1, UE2 ; UE) présente des moyens pour l'enregistrement d'une information (PAZ2 ; PAZ4) destinée au poste d'abonné (UE1, UE2 ; UE) en utilisant un canal d'affichage d'adressage paginé (MBMS PICH) dédié à des services MBMS, les indicateurs d'adressage paginé (PAZ2 ; PAZ4) des cycles de réception discontinus étant reçus périodiquement sur le canal d'affichage d'adressage paginé (MBMS PICH) dédié à des services MBMS ou une information d'affichage d'adressage paginé (PAI) étant reçue sur le canal d'affichage d'adressage paginé de cellule (CELL PICH), et les indicateurs d'adressage paginé (PAZ2 ; PAZ4) comprenant des informations sur un canal de contrôle de services MBMS (MCCH).

14. Système de radiocommunication en particulier pour la mise en oeuvre d'un procédé selon l'une quelconque des revendications 1 à 8 comprenant au moins un poste de base (NodeB) selon l'une quelconque des revendications 9 à 12 et un poste d'abonné (UE1, UE2 ; UE) selon la revendication 13.
